# EUROPEAN PATENT APPLICATION

(11) **EP 4 528 493 A1**
(43) Date of publication of application: **26.03.2025**
(21) Application number: 23198947.6
(22) Date of filing: 21.09.2023
(51) Int. Cl.: G06F 9/445, G06F 9/455, G06F 9/50

(54) **SYSTEM AND METHOD FOR DEPLOYING SOFTWARE APPLICATIONS**

(71) Applicant: Codesphere, Inc., Redwood City, CA 94063 (US)
(72) Inventor: SCHNEIDER, Elias, 76131 Karlsruhe (DE); SCHRODI, Tim, 76185 Karlsruhe (DE)
(74) Representative: Hoyng Rokh Monegier B.V.

(57) **Abstract**

A method for deploying or scaling a user application in a container execution system comprising a plurality of nodes. The method comprises initializing a pool of a plurality of containers running on one or more of the nodes, each container of the pool having compute resources specified at a first lower level, and receiving a request for deploying or scaling up the user application. One of the nodes is selected which has sufficient additional compute resources for running a new instance of the user application and one of the containers of the pool running on the selected node is selected. The selected container is scaled up without restarting the container, by increasing the compute resources specified for the selected container to a second higher level to generate a scaled-up container, wherein the scaling is based on one or more scaling parameters, and the user application is run in the newly scaled-up container on the selected node.

## Description

### TECHNICAL FIELD

This disclosure generally relates to containerized deployment of user applications, and more particularly, to a system and method for fast deployment and scaling of user applications.

### BACKGROUND

A virtual machine (VM) is the virtualization or emulation of a computer system. Virtual machines execute on a physical computer usually referred to as the 'host', and a virtual machine emulated on that host is usually referred to as the 'guest' . Hypervisor software running on the host computer is usually used to run the operating system (OS) for each guest VM, where the guest OS is different from the host OS. The hypervisor maps the virtual memory used by each guest OS to the physical memory of the host computer and allocates access to the host CPU. There may be multiple VMs running on the host, each VM running one or more software applications in isolation from applications running in other VMs on the host.

A "container" is software which is used to deploy and run a software application, service, or resource, referred to collectively hereafter as a "user application". Similarly to VMs, containers enable applications running in multiple containers to run in isolation from each other on the same host. Containers share many characteristics with virtual machines, but are generally more lightweight than VMs since they typically share the kernel of the host OS, can start more quickly than VMs (because the OS kernel is already running), and usually need less compute resources.

Containers solve the problem of enabling user applications to run reliably on different computing environments without requiring adjustment for each computing environment, but with the above-mentioned advantages over VMs. Containers can be used to support portability from one computing environment to another, such as from a computer used for developing an application to another computer for testing the application, and finally to various computers in which the user application will be used, where each computer may provide a different computing environment having different operating systems, different versions of software, different software libraries, different configuration settings etc. The computing environments may range from a stand-alone computer to a virtual machine executing in a private or public cloud computing environment.

Containers operate by packaging user applications together with the runtime environment needed for the application to execute into a unit that can be distributed and run on different computing environments. The runtime environment packaged in the container may contain code, runtime environment, software libraries, and configuration files needed to run the relevant user application. By including both the user application and its runtime environment in a software container, differences in the underlying execution environment operating system and/or other underlying infrastructure are abstracted. However, the underlying computing environment still runs a single operating system, and each container shares the operating system kernel with any other containers running in that computing environment.

A container is typically a running instance of a container image. The image may be created by packaging the program code for a user application with its runtime environment and data needed for its execution. For example, a Docker container image may be created for a user application by creating a Dockerfile, a plaintext file containing instructions that the Docker software uses to package up the application to create a Docker image. The image contains everything the user application needs to run, including the (compiled) code for the user application, a full or cut-down operating system (e.g. including the OS Application Layer), runtime environment (e.g. Node.js JavaScript runtime environment for a JavaScript application), code for running the application (e.g. npm package manager for a JavaScript application), third party libraries, environment variables, execution instructions etc.

The container image may be stored in an accessible location, such as a registry hosted on a network server, to enable download of the container image to a node for deployment of the user application. The term "node" is used herein to denote a physical or virtual server for running containers, typically as part of or cooperating with a container orchestration system used for automating the deployment, management, scaling, and networking of containers. A node or cluster of nodes accepts deployments of containers via the orchestration system, provides them with a subset of its physical or virtual compute resources, and runs the containers. Each node has a collection of compute resources such as CPU or virtual CPU compute resources, GPU computer resources, memory resources such as random access memory (RAM), longer-term data storage such as disks, SSDs, etc., data communication resources, and any other physical computer parts connected via network.

Deploying and scaling a user application in one or more containers requires downloading the container image, creating the required containers, mounting the containers to a suitable file system for data storage, and initiating execution of the containers. Although these actions can be executed relatively quickly, it is desirable to have a system which can deploy and scale up user applications sufficiently quickly to avoid or reduce downtime for the user application and exhaustion of compute resources for running the user application. Prior methods are relatively slow, sometimes requiring a minute or more to deploy and scale a user application, or require reserving compute resources for future deployment or scaling which results in wasted cost for resources which are unused while waiting for the deployment or scaling. This is particularly useful for managing fluctuating compute workloads for applications such as machine learning and artificial intelligence applications, and direct to consumer applications which require large compute resources which fluctuate rapidly.

### SUMMARY OF INVENTION

The present invention is addressed the foregoing problems, by providing a method for deploying or scaling a user application in a container execution system comprising a plurality of nodes. The method comprises initializing a pool of containers running on one or more of the nodes, each of the containers of the pool having compute resources specified at a first lower level. The method further comprises receiving a request for deploying or scaling up the user application; determining one or more scaling parameters based on the received request; selecting one of the nodes, the selected node having sufficient additional compute resources for running another instance of the user application; selecting one of the containers of the pool running on the selected node; scaling up the selected container without restarting the container, by increasing the compute resources specified for the selected container to a second higher level to generate a second scaled-up container, wherein the scaling is based on the one or more scaling parameters; and running the user application in the newly scaled-up container on the selected node.

The method may further comprise mounting a container filesystem of a shared filesystem to each of the plurality of containers of the pool. By pre-mounting the filesystems to the pre-running containers, the time required to later vertically scale up any of the containers in the pool is reduced because they already have a filesystem mounted. The filesystems mounted to each of the plurality of containers of the pool preferably do not contain program code for the user application. The filesystems mounted to the containers of the pool preferably have a small data storage size, which may be smaller than needed to store the user application and/or the runtime environment for the user application, and the filesystems may be empty. When one of the pool containers is vertically scaled up to deploy or scale the user application, the corresponding filesystem mounted to the container may also be scaled up to accommodate the code and data for running the user application in the newly scaled-up container. Note that the container which is scaled up is removed from the pool.

The request for deploying or scaling up the user application may include data comprising program code for the user application and associated data for running the user application in one of the containers. The data may be downloaded from a data source remote from the container execution system. This data download may be needed, for example, for initial deployment of the user application, but may not be needed for scaling the user application when it is already running in a node of the container execution system.

The method may further comprise running a first scaled-up container on a node of the container execution system before the request is received, wherein a first container filesystem containing program code for the user application and associated data for running the user application is mounted to the first scaled-up container, and mounting the first container filesystem to the newly scaled-up container. Thus, when the user application is already running in a node of the container execution system, the user application may be rapidly horizontally scaled by scaling up one of the pool containers and mounting the newly scaled-up container to the filesystem which already being used to run the user application in another container (the first container). This enables the system to run another instance of the user application in an already existing container from the pool which has been vertically scaled for this purpose.

The method may further comprise running a first scaled-up container on a node of the container execution system before the request is received, wherein a first container filesystem containing program code for the user application and associated data for running the user application is mounted to the first scaled-up container, and mounting the first container filesystem to each container of the pool before the request is received. This also involves the situation when the user application is already running in a node of the container execution system. The user application may be rapidly horizontally scaled by scaling up one of the pool containers which is already mounted to the filesystem already being used to run the user application in another container (the first container). Thus, another instance of the user application may be generated using an already existing container from the pool which has been vertically scaled for this purpose and is already mounted to the filesystem containing the user application.

The containers of the pool may be generated from a single base container image. The base container image used to generate the containers of the pool preferably does not include the program code for the user application, and preferably does not include at least a portion of the runtime environment required for running the user application. The runtime environment for running the user application in one of the containers may include runtime code for executing the user application, software libraries, environment variables, configuration parameters, and/or execution instructions. The pool containers generated from such a container image will have a smaller size than containers which include the user application and runtime environment. Similarly, the filesystems mounted to the pool containers may be smaller as they do not need to store the program code and runtime environment for the user application. This reduces the compute resources needed to run the pool containers and reduces the required size of the pool container filesystems.

The pool of containers may comprise two portions, a dedicated pool of containers wherein each container of the dedicated pool is mounted to a corresponding container filesystem of a shared filesystem, and a general pool of containers wherein each container of the general pool is not mounted to a filesystem. This provides flexibility for scaling different user applications.

The compute resources specified for the containers of the pool are preferably less than the compute resources needed to run the user application. The compute resources specified for the containers of the pool may be determined by requests for compute resources including a memory size request and a CPU execution time request.

The scaling parameters may be based on one or more of the user application size, minimum compute resources for a container running the user application, maximum compute resources for a container running the user application, minimum replica counts for containers running the user application, and/or maximum replica counts for containers running the user application.

Another aspect of the invention comprises a system for deploying or scaling a user application. The system comprises a container execution system comprising a plurality of nodes each node configured to run one or more user applications in one or more containers; a shared filesystem comprising one or more container filesystems for storing program code for the user application, and associated data for running the user application in one of the containers; and a container orchestration system comprising: a scheduling module configured to initialize a pool of a plurality of containers running on one or more of the nodes of the container execution system, each container of the pool having compute resources specified at a first lower level; a communication module configured to receive a request to deploy or scale the user application; and a vertical scaling module configured to, in response to receiving the request, select one of the nodes and one of the containers of the pool running on the selected node, and to scale up the selected container without restarting the container by increasing the compute resources specified for the selected container to a second higher level to generate a scaled-up container, wherein the scaling is based on one or more scaling parameters based on the request; and wherein the selected node is configured to run the user application in the scaled-up container.

In some embodiments, the container filesystems mounted to the containers of the pool do not contain program code for the user application. The system may be configured with a single container filesystem mounted to the containers of the pool, wherein the container filesystem contains program code for the user application. The scheduling module may be configured to generate the plurality of containers of the pool from a single base container image. The compute resources specified for the containers of the pool may be less than the compute resources needed to run the user application.

### BRIEF DESCRIPTION OF THE DRAWINGS

Embodiments will now be described, by way of example only, with reference to the accompanying drawings in which corresponding reference symbols indicate corresponding parts, and in which:
FIG. 1 is a simplified schematic diagram of a system for deploying a user application;
FIG. 2 is a simplified schematic diagram of the system of FIG. 1 wherein the system is used for scaling a user application using a general container pool; and
FIG. 3 is a simplified schematic diagram of the system of FIG. 1 wherein the system is used for scaling a user application using a dedicated container pool.

The drawings are intended for illustrative purposes only, and do not serve as restriction of the scope of protection as laid down by the claims.

### DESCRIPTION OF EMBODIMENTS

Hereinafter, certain embodiments will be described in further detail. It should be appreciated, however, that these embodiments should not be construed as limiting the scope of protection for the present disclosure.

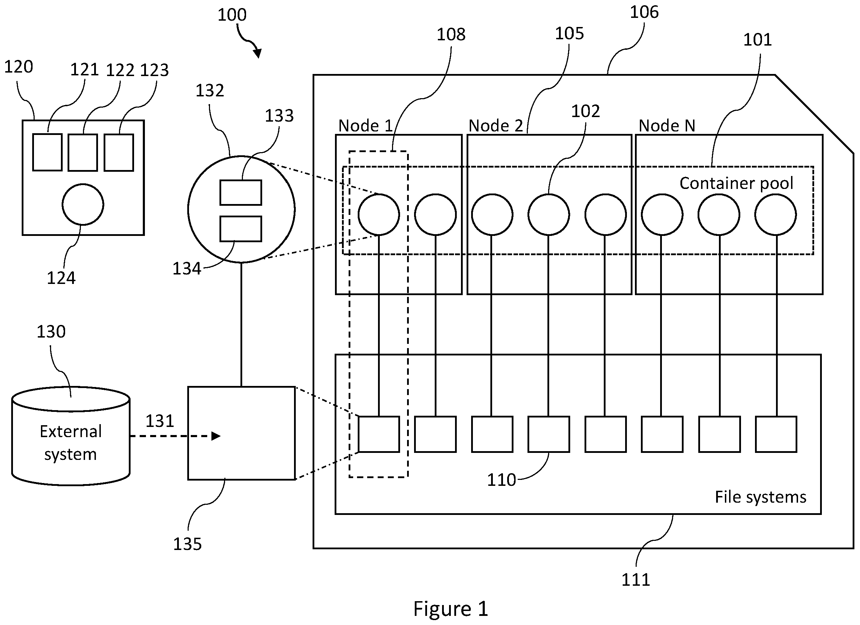

FIG. 1 is a simplified schematic diagram of a system 100 for deploying a user application, and depicting the initial creation and deployment of the user application.

A pool 101 of containers 102 are created and are deployed on one or more nodes 105 of a container execution system 106. All of the containers 102 of the pool 101 may be generated from a single base container image 124, so that the pre-running containers 102 are replicated instances of the same base container image 124.

The containers 102 preferably have a minimal size, such that the containers do not include the user application and many of the other components required to execute the user application, as described further below. The compute resources requested for each container 102, also referred to herein as the "size" of the container, is preferably set to resource values sufficient for executing the minimal sized containers 102. As described herein, the compute resources sufficient for running the containers 102 may include a small margin above the resources strictly necessary for running the containers 102, but should not be significantly more than this level of resources. These containers 102 are referred to herein as "minimal containers" or "pre-running containers" to distinguish them from containers which have been vertically scaled up to have sufficient available compute resources for running the user application 133.

Each container will require certain compute resources of the computing environment to execute properly. These compute resources usually include a certain amount of CPU execution time (e.g. expressed as a percentage of total CPU time or certain units of CPU processing time or power) and a certain size of memory random access memory (RAM) allocated for use by the user application (e.g. expressed as megabytes or gigabytes of storage). Other compute resources that may also be requested include, for example, amount of GPU execution time, amount of GPU memory, network communication resources, size of disk space allocated for use by the user application. A container's resource requirements may be specified according to resource requests and resource limits, which may be specified in a container image used to generate a running container. Resource requests specify the compute resources that should be reserved for a container, and resource limits specify the maximum amount of resources a container is allowed to use. For example, a container may request 64 MB of memory and 250 milliCPU units, and may have resource limits of 128 MB of memory and 500 milliCPU units.

In the system 100, for example, the resource request values for each container 102 may be set to a preconfigured minimal size, which may be less than the compute resources expected for running the user application being deployed. For example, the size of the containers 102 may be set to 50 MB of memory and 50 milliCPU of CPU resources. The compute resource limits specified for each of the pool containers 102 may also be set to a preconfigured minimal size. The resource request values and resource limit values may be specified in the base container image 124 used to generate the containers 102.

The containers 102 preferably do not include a copy of the user application, and may also omit some or all of the runtime environment required for running the user application, i.e. the container image used to generate the containers 102 preferably does not include the user application or the (complete) runtime environment code. The containers may be generated including a copy of the OS (which may be a cut-down version of the OS, e.g. omitting the OS kernel).

Each of the containers 102 in pool 101 is pre-mounted to a corresponding filesystem 110. For example, a volume or directory may be created for each container 102 on a shared filesystem 111, and each volume or directory mounted to a corresponding container 102 to form a container filesystem 110 for each container. The container filesystems 110 mounted to the containers 102 are preferably specified with a minimal size and may be empty (i.e. contain minimal or no stored data). The container filesystems 110 do not contain the user application 133 and associated runtime environment 134. The container filesystems 110 are sufficiently large for running the minimal containers 102 but not larger. These container filesystems 110 are referred to herein as "minimal filesystems" to distinguish them from filesystems which have been vertically scaled up to have sufficient available storage capacity for storing and running the user application 133 and runtime environment 134. The shared filesystem 111 may be a remote filesystem, for example running on a network server, cloud storage, or the like.

The containers 102 depicted in FIG. 1 thus form a "dedicated" pool 101 of minimal containers 102 which are available for deployment of the user application 133, the containers 102 all being pre-mounted to minimal filesystems 110 which are part of shared filesystem 111.

The containers 102 are each generated and assigned to run on one of the nodes 105. This may be managed by a container orchestration system 120, for example Kubernetes, which is responsible for selecting an appropriate node on which to deploy the container such that the selected node has sufficient available compute resources to meet the resource requirements of all of the containers running on that node. The container orchestration system 120 includes a scheduling module 121, a communication module 122 configured to receive requests to deploy or scale the user application, and a vertical scaling module 123 for performing vertical scaling of containers based on one or more scaling parameters. The scheduler 121 of container orchestration system 120 may be used to schedule the containers 102 to run on the selected nodes 105. The containers 102 in pool 101 are pre-running, i.e. they are run as active processes on the nodes 105. Because the containers 102 and container filesystems 110 have a minimal size, the pool of pre-running containers 102 consumes minimal compute resources of the execution system 106.

When a user or other external system wants to create or deploy a user application 133 on the execution system 106, a request for deploying or scaling up the user application is sent. This may include the data 131 needed for deploying the user application 133, or may trigger its download from an external system, such as a remote server 130, to the execution system 106. This data 131 may include the (compiled) program code for the user application 133, and runtime environment 134 for running the application, which may include runtime code for executing the application, software libraries, environment variables, configuration parameters, execution instructions etc. The OS (e.g. a full or cut-down OS) may also be downloaded if needed.

One of the containers 108 is selected from the pool 101 (and is removed from the pool 101 of available pre-running containers 102). The compute resources required for running the user application 133 are determined based on the deployment/scaling request and/or the data 131, and a node 105 is selected which has sufficient available compute resources to accommodate the additional compute resources needed to run the user application 133. One of the prerunning containers 108 running on the selected node is selected for running the user application 133. This selection of the container may be made, for example, by the scheduler 121.

The selected container 108 is then vertically scaled, without restarting the container, to a larger scaled-up container 132 with the assigned resource level for execution of the user application 133 and runtime environment 134. For example, the resource request value for RAM memory may be scaled up from a preconfigured minimal value of 50 MB to 4 GB, and the resource request value for CPU may be scaled up from a preconfigured minimal value of 50 mCPU to 2 CPUs. The container filesystem 135 for the scaled-up container 132 may also be scaled to a larger size, to accommodate the increased data storage requirements for code and data for the user application 133 and runtime environment 134, and for running the user application 133 in container 132.

The scaling of the selected container 108 and the container filesystem 110 may be determined based on scaling parameters. These may be specified by the data 131 or specified separately by the user in the deployment/scaling request or otherwise. The scaling parameters may be based on one or more of the user application size, minimum compute resources for a container running the user application, maximum compute resources for a container running the user application, minimum replica counts for containers running the user application, and/or maximum replica counts for containers running the user application.

The vertical scaling of selected container 108 to scaled-up container 132 is preferably accomplished without terminating and restarting the container 108. This may be accomplished for example using the vertical scaling facilities available in version 1.27 of the Kubernetes container orchestration software. This software provides for in-place update of pod resources, which supports updating resource requests and limits for a running container without having to terminate the pod which is running the container, and this results in faster vertical scaling of the container.

The user application 133 is then started running on the selected node 105 in the scaled-up container 132 with scaled-up filesystem 135, based on the downloaded data 131. Note that more than one container 102 may be selected from the pool 101 and scaled up at the same time as described above, to provide greater horizontal scaling of the compute capacity for the user application 133.

The system and method described above enables fast deployment of a user application 133, because the container 132 used to run the user application 133 is generated by rapid vertical scaling of an already-running container 108. The container 108 is already mounted to container filesystem 110, which can also be rapidly vertically scaled to provide sufficient storage capacity for the downloaded user application 133 and runtime environment 134. As a result, the time for deployment of the user application 133 is very short, being largely determined by the time required to download the code and data. For example, the deployment of a user application of moderate size may be accomplished in less than a second using the described system and method, although the download of large user applications may take much longer. Furthermore, because the containers 102 and container filesystems 110 have a minimal size, the pool 101 of pre-running containers 102 consumes minimal compute resources of the container execution system 106, avoiding a loss of efficiency in the system.

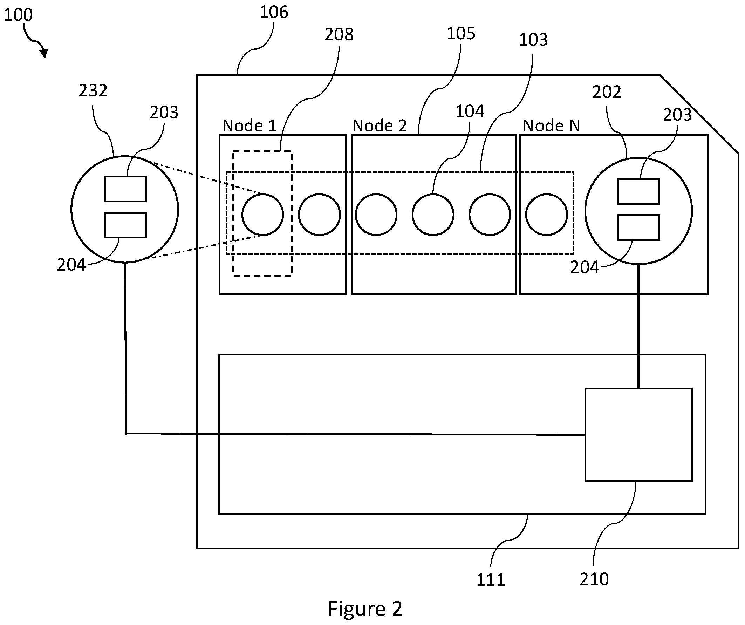

FIG. 2 is a simplified schematic diagram of the system 100 for deploying a user application as described with reference to FIG. 1, wherein the system is used for scaling up a user application using a general container pool. In this example, the user application is already running (for example following the situation described with reference to FIG. 1).

Similarly to the situation described for FIG. 1, a pool 103 of pre-running minimal containers 104 are generated and the containers 104 are running on one or more nodes 105 of execution system 106. Unlike the containers 102 described above, the containers 104 are not pre-mounted to filesystems, and thus form a "general" pool 103 in which the containers 104 are available for deployment of any user application, i.e. the containers 104 are not dedicated for deployment of the same user application, but different containers 104 may be used for deploying different user applications. This situation may occur because all of the containers of a dedicated pool have already been used for deploying the user application, or no dedicated pool of containers was created.

Similarly to the containers 102 described above, the pre-running containers 104 have a minimal size, e.g. they do not include a user application or runtime environment so that they do not run any user code. The containers 104 are specified with the minimum amount of compute resources they need to run, as described earlier.

A container 202, e.g. from a dedicated pool 101 or general pool 103, has been vertically scaled to increase the compute resources available to the container so that sufficient compute resources are available to the container 202 to run the user application 203 with runtime environment 204. Container 202 has a container filesystem 210 mounted. The code and data for the user application 203 and runtime environment 204 have already been downloaded and are stored in the container filesystem 210 which has been scaled up to provide sufficient storage capacity for the downloaded code and data. The user application 203 may be already running in container 202, or may be awaiting an execution instruction to begin running.

A scale request may be received by system 100 to increase the compute capacity for the user application 203. This scale request may be either triggered manually from a user, or triggered by another external system, or generated automatically by system 100 based on the usage of compute resources by the running container 202. The scale request may result in further vertical scaling of container 202, or may result in horizontal scaling as depicted in FIG. 2.

In response to the scale request, one of the containers 104 is selected from the pool 103. As described earlier, a node 105 is selected which has sufficient available compute resources to accommodate the additional compute resources needed to run another instance of a container running the user application 203. The selected node is preferably running on a different node than the node running the user application 203 in container 202, to protect against node or other failures. A container 208 running on the selected node is chosen from the pool 103 for running the user application 203 and the container 208 is vertically scaled to generate scaled-up container 232, similarly to the deployment scenario described with reference to FIG. 1. As described earlier, the compute resources allocated to the container 232, such as CPU time, memory, GPU time etc., are increased to accommodate the expected resource requirements for running the user application 203. This selection of the node and container and scaling of the container may be managed, for example, by a scheduler 121.

The same container filesystem 210 that is mounted to container 202 is mounted ad-hoc to the newly scaled-up container 232. The filesystem 210 already contains the code and data for the user application 203 and runtime environment 204, so these are immediately available to the newly scaled container 232.

The user application 203 is started in container 232 (and may also be started in container 202 if it is not already running there) based on the already existing code and data in the filesystem 210. Note that more than one container 104 may be selected from the pool 103 and scaled up at the same time as described above, to provide greater horizontal scaling of the compute capacity for the user application 203.

The system and method described above is thus able to provide fast scaling of the user application 203 because the container 208 which is scaled up to provide additional execution capacity for running the user application 203 is already running. In addition, the user application 203 and runtime environment 204 are already built, being already downloaded and stored in the container filesystem 210. Thus, the time required for scaling up is mostly determined by the time to mount the filesystem 210 to the newly scaled up container 232, and to start the user application 203 in the container 232. For example, the scaling up of a user application may be accomplished in about 200 milliseconds using the described system and method, As previously noted, the minimal size of the pre-running containers 104 reduces the load imposed on the execution system 106.

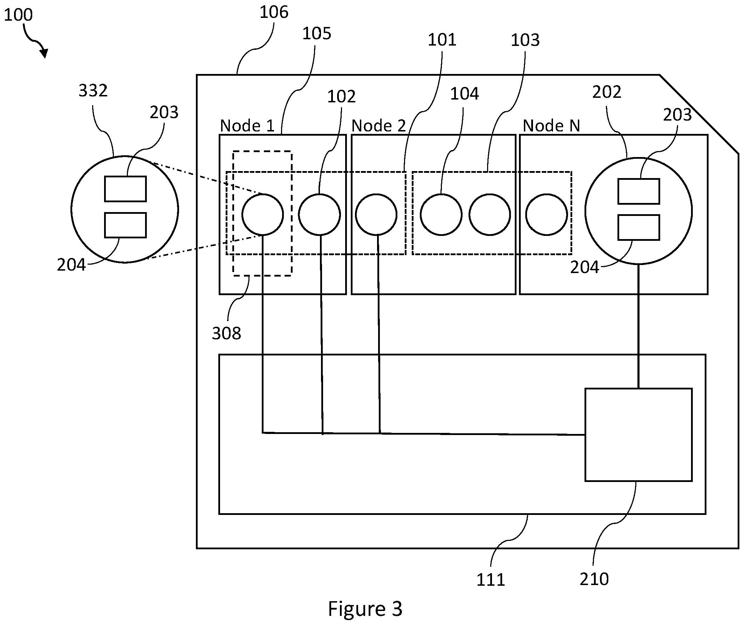

FIG. 3 is a simplified schematic diagram illustrating a system 100 for deploying a user application as described with reference to FIGs. 1 and 2, wherein the system is used for scaling a user application using a dedicated container pool.

As described above with reference to FIG. 2, a container 202 has been generated on one of the nodes 105 of container execution system 106, and the container 202 mounted to filesystem 210 which contains code and data for the user application 203 and runtime environment 204. An execution instruction may have been executed so that the user application 203 has begun running in container 202.

A general pool 103 of minimal containers 104 are running on one or more of the nodes 105, as described above with reference to FIGs. 1 and 2. In addition, a dedicated pool 101 of minimal containers 102 are also running on one or more of the nodes 105. For this pool 101, the containers 102 have already mounted the same container filesystem 210 which is mounted to container 202 and used by the running user application 203. The pool 102 is preferably spread among different nodes 105 to protect against node or other failures.

A scale request may be received by system 100 to increase the compute capacity of the user application 203. This may be either triggered manually from a user, or triggered by another external system, or generated automatically by system 100 based on the usage of compute resources by the running container 202. The scale request may result in further vertical scaling of container 202, or may result in horizontal scaling as depicted in FIG. 3.

Similarly to the scenario in FIG. 2, in response to the scale request, one of the containers 102 is selected from the pool 101. As described earlier, a node 105 is selected which has sufficient available compute resources to accommodate the additional compute resources needed to run another instance of a container running the user application 203. The selected node is preferably a different node than the node running the user application 203 in container 202, to protect against node or other failures. A pool container 308 running on the selected node is chosen for running the user application 203 and the container 308 is vertically scaled to generate scaled-up container 332. As described earlier, the compute resources allocated to the container 332, such as CPU time, memory, GPU time etc., are increased to accommodate the expected resource requirements for running the user application 203. This selection of the node and container and scaling of the container may be managed, for example, by a scheduler 121.

The same container filesystem 210 that is mounted to container 202 is also mounted ad-hoc to the newly scaled-up container 232. If the user application 203 has already started running in container 202, then the user application 203 is started in newly scaled container 232 based on the already existing data on the filesystem 210. Otherwise an execution instruction may be run to start the user application 203 running in both containers 202 and 232.

The system and method described above provides even faster scaling of the user application 203. The container 308 which is scaled up to provide additional execution capacity for running the user application 203 is already running, the user application 203 and runtime environment 204 are already built, being already downloaded and stored in the filesystem 210, and the filesystem 210 is already mounted to newly scaled up container 332 and immediately available to the newly scaled up container. This reduces the time for scaling up to about 20 milliseconds using the described system and method. And as previously noted, the minimal size of the pre-running containers reduces the load imposed on the execution system 106.

While certain embodiments of the invention have been described herein, the invention is not limited to these embodiments. Two or more of the above embodiments may be combined in any appropriate manner, an elements and components of the described embodiments may be substituted or modified using alternatives readily apparent to the skilled person.

## Claims

1. A method for deploying or scaling a user application (133, 203) in a container execution system (106) comprising a plurality of nodes (105), the method comprising:
initializing a pool (101, 103) of a plurality of containers (102, 104) running on one or more of the nodes (105), each of the plurality of containers (102, 104) of the pool having compute resources specified at a first lower level;
receiving a request for deploying or scaling up the user application (133, 203);
determining one or more scaling parameters based on the received request;
selecting one of the nodes (105), the selected node having sufficient additional compute resources for running another instance of the user application (133, 203);
selecting one of the containers of the pool running on the selected node;
scaling up the selected container (108, 208, 308) without restarting the container, by increasing the compute resources specified for the selected container to a second higher level to generate a second scaled-up container (132, 232, 332), wherein the scaling is based on the one or more scaling parameters; and
running the user application (131, 203) in the newly scaled-up container (132, 232, 332) on the selected node (105).

2. The method of claim 1, further comprising:
mounting a container filesystem (110) of a shared filesystem (111) to each of the plurality of containers (102) of the pool (101).

3. The method of claim 2, wherein the filesystems (110) mounted to each of the plurality of containers (102) of the pool (101) do not contain program code for the user application (133).

4. The method any one of the preceding claims, wherein the request for deploying or scaling up the user application includes data (131) comprising program code for the user application (133) and associated data (134) for running the user application in one of the containers (102).

5. The method of claim 1, further comprising:
running a first scaled-up container (202) on a node (105) of the container execution system (106) before the request is received, wherein a first container filesystem (210) containing program code for the user application (203) and associated data (204) for running the user application is mounted to the first scaled-up container (202); and
mounting the first container filesystem (210) to the newly scaled-up container (232).

6. The method of claim 1, further comprising:
running a first scaled-up container (202) on a node (105) of the container execution system (106) before the request is received, wherein a first container filesystem (210) containing program code for the user application (203) and associated data (204) for running the user application is mounted to the first scaled-up container (202); and
mounting the first container filesystem (210) to each container (102) of the pool (101) before the request is received.

7. The method of any one of the preceding claims, wherein the containers (102, 104) of the pool (101, 103) are generated from a single base container image (124).

8. The method of any one of the preceding claims, wherein the pool (101, 103) of containers (102, 104) comprises a dedicated pool (101) of containers (102) wherein each container of the dedicated pool is mounted to a corresponding container filesystem (110, 210) of a shared filesystem (111), and a general pool (103) of containers (104) wherein each container of the general pool is not mounted to a filesystem.

9. The method of any one of the preceding claims, wherein the compute resources specified for the containers (102, 104) of the pool (101, 103) are less than the compute resources needed to run the user application (133).

10. The method of any one of the preceding claims, wherein the containers (102, 104) of the pool (101, 103) do not include the user application (133, 203), and/or omit at least a portion of the runtime environment (134, 204) required for running the user application (133, 203).

11. A system for deploying or scaling a user application (133, 203), the system comprising:
a container execution system (106) comprising a plurality of nodes (105), each node configured to run one or more user applications in one or more containers;
a shared filesystem (111) comprising one or more container filesystems (110, 210) for storing program code for the user application (133, 203) and associated data (134, 204) for running the user application in one of the containers; and
a container orchestration system (120) comprising:
a scheduling module (121) configured to initialize a pool (101) of a plurality of containers (102) running on one or more of the nodes (105) of the container execution system (106), each container (102) of the pool having compute resources specified at a first lower level;
a communication module (122) configured to receive a request to deploy or scale the user application (134); and
a vertical scaling module (123) configured to, in response to receiving the request, select one of the nodes (105) and one of the containers (102) of the pool (101) running on the selected node, and to scale up the selected container (108) without restarting the container by increasing the compute resources specified for the selected container to a second higher level to generate a scaled-up container (132), wherein the scaling is based on one or more scaling parameters based on the request; and
wherein the selected node (105) is configured to run the user application (131, 203) in the scaled-up container (132, 232, 332).

12. The system of claim 13, wherein the container filesystems (110, 210) mounted to the containers (102) of the pool (101) do not contain program code for the user application (133, 203).

13. The system of claim 13, wherein a single container filesystem (210) is mounted to the containers (102) of the pool (101), wherein the container filesystem (210) contains program code for the user application (203).

14. The system of any one of claims 13-15, wherein the scheduling module (121) is configured to generate the plurality of containers (102, 104) of the pool (101, 103) from a single base container image (122).

15. The system of any one of claims 13-16, wherein the compute resources specified for the containers (102, 104) of the pool (101, 103) are less than the compute resources needed to run the user application (133).
